# EUROPEAN PATENT SPECIFICATION

(11) **EP 1 620 907 B1**
(45) Date of publication and mention of the grant of the patent: **22.08.2007**
(21) Application number: 04758121.0
(22) Date of filing: 24.03.2004
(51) Int. Cl.: H01M 2/06, H01M 2/20, H01M 2/32, H01M 2/36

(54) **POLYMIDE PROTECTED BATTERY FEEDTHROUGH**
POLYIMID-GESCHÜTZTE BATTERIE-DURCHKONTAKTIERUNG
TRAVERSEE DE BATTERIE PROTEGEE PAR DU POLYIMIDE

(30) Priority: 24.03.2003 US 395750
(43) Date of publication of application: 01.02.2006
(73) Proprietor: Medtronic Inc., Minneapolis, MN 55432 (US)
(72) Inventor: HELLER, Bernard, F. Jr., Fridley, MN 55421 (US)
(74) Representative: Hughes, Andrea Michelle
(86) International application number: PCT/US2004/009013
(87) International publication number: WO 2004/086538

(56) References cited:
- US-A- 4 460 664
- US-A- 5 139 898
- US-A- 5 811 206

## Description

This application relates to feedthroughs employed in electrochemical cells or batteries, particularly miniaturized, high energy density primary batteries for implantable medical devices (IMDs), and more particularly to protective coatings for such feedthroughs to protect feedthrough insulators from degradation by the cell electrolyte.

Electrical feedthroughs serve the purpose of providing an electrical circuit path extending from the interior of a hermetically sealed container to an external point that is electrically insulated from the container itself, such as in an electrochemical cell. Many such feedthroughs that provide such an electrical path are known in the art, but they generally comprise a ferrule adapted to be attached, by welding or adhesive, to a hermetically sealed enclosure, a feedthrough pin or "lead" for conducting battery current, and simple single-element or more complex multi-element insulator structures supporting the feedthrough pin within the ferrule and electrically insulated from the ferrule. One of the simplest single-element insulator structure is formed of glass that is deposited in its molten state or melted in situ with the feedthrough pin supported centered in the ferrule. The non-conductive glass supports the feedthrough pin centered in the ferrule upon cooling and solidification into a solid ring adhered to the feedthrough pin and the ferrule wall. A wide range of non-conductive glass compositions have been used or proposed for such use over the years.

Electrochemical cells having such a hermetically sealed enclosure and requiring use of a feedthrough or feedthroughs to make an electrical connection with an anode or cathode or both have been developed to power a variety of equipment and devices. A great deal of effort has been expended over many years to miniaturize, reduce cost, increase features, and prolong useful life of such battery powered equipment and devices. These efforts make it important to be able to design and fabricate highly miniaturized, long lasting, electrochemical cells and their components, including the electrical feedthroughs, that are correspondingly smaller in dimension. Even as feedthrough dimensions are miniaturized, it is of paramount importance that the feedthroughs are not attacked or degraded by the electrolyte, the anode or the cathode materials of the cell.

For example, electrochemical cells used in IMDs, e.g., implantable monitors and therapy delivery devices, to power circuitry or delivery a therapy have been highly miniaturized over time, yet have retained high energy density through the use of reactive anodes, cathodes, and electrolytes and advanced manufacturing techniques. Such electrochemical cells provide power for stimulation therapies delivered by implantable pulse generators (IPGs) of cardiac pacemakers, brain stimulators, gastric stimulators, nerve and muscle stimulators, and implantable cardioverter/defibrillators (ICDs) or to operate an implantable drug pump to dispense a drug bolus. A wide variety of electrical feedthroughs have been proposed or employed in commercialized electrochemical cells to provide the electrical paths from the anodes and/or cathodes within the cell enclosures to the electronic circuitry within the housing of the IPG or monitor or drug dispenser.

Lithium/iodine electrochemical cells as described in U.S. Patent Nos. 4,166,158, 4,460,664, and 5,306,581, and in commonly assigned U.S. Patent No. 5,643,694, for example, have been widely used to power circuitry of cardiac pacemaker IPGs. The anode is formed of lithium metal usually supported on a conductive perforated current collector electrically attached to an anode feedthrough pin. The cathode comprises a charge transfer complex of an organic electron donor component material and iodine that is in direct contact with the conductive cell enclosure that the feedthrough ferrule is welded to. The electron donor can be any organic compound having a double bond or an amine group. The electron donor functions to give iodine sufficient conductivity. One preferred form of the organic donor is poly-2-vinylpyridine (P2VP). A solid lithium iodide electrolyte forms over the exposed surface of the lithium anode.

The reactive iodine cathode is capable of attacking many insulator materials that are used in such feedthroughs, e.g., glass insulator compounds of the types disclosed in the above-referenced '664 and '581 patents. Severe degradation of the insulator can result in an electrical short of the lead to the ferrule and/or migration of the cathode along the lead or pin and through electrical conductors coupled therewith to the circuitry and cause circuit malfunctions. Therefore, the insulator and the feedthrough pin used in such lithium/iodine cells are insulated by materials that are not degraded by the iodine cathode.

For example, in the above-referenced '694 patent, the feedthrough ferrule is formed with an internal cavity surrounding the inwardly extending feedthrough pin. An extension of the anode current collector is welded to the feedthrough pin. A nonconductive insulating material that is nonreactive with iodine, i.e., does not exhibit electronic conduction when exposed to iodine, is injection molded over the anode current collector extension and feedthrough pin and into the cavity to provide a single piece seamless insulator. Fluoropolymer materials including ethylene-chlorotrifluoroethylene (E-CTFE) and ethylene-tetrafluoroethylene (E-TFE) that can be injection molded and that perform satisfactorily are suggested for use.

In a further approach disclosed in commonly assigned U.S. Patent No. 5,549,985, a lithium/iodine-P2VP "button" cell is disclosed wherein an insulating layer overlies the inner surface of the feedthrough insulator. The preformed insulator cup is formed of one of polypropylene, a modified polytetrafluoroethylene, a fluoropolymer, or a polyvinylidenefluoride. In this design, the cathode is isolated from the region of the insulator cup, and the insulator cup does not necessarily have to be in intimate contact with the glass insulator.

More recently, higher energy, miniaturized, hermetically sealed, electrochemical cells have also been developed to supply energy to charge high voltage capacitors in ICD IPGs to deliver cardioversion/defibrillation shocks in the range of 30 joules to counter ventricular tachyarrhythmias. As disclosed in commonly assigned U.S. Patent Nos. 5,716,729, 5,766,797, 5,811,206, 6,017,656, 6,132,896, and 6,232,012 typically such electrochemical cells are formed having a lithium anode, a silver vanadium oxide, i.e., Ag₂V₄O₁₁ (aka SVO) cathode or a hybrid CFₓ/SVO cathode formed of SVO and carbon monofluoride (CFₓ), and a liquid organic type electrolyte that comprises a lithium salt in combination with an organic solvent. The SVO cathode may include a binder selected from among powdered PTFE, polyimide, graphite or carbon black pressed onto a metal current collector formed of Ni or Ti, for example, and enveloped by a separator of microporous materials, e.g., polyethylene, polypropylene, ethylene tetrafluoroethylene (ETFE), or the like. These lithium/SVO and hybrid lithium/CFₓ/SVO cells have also been used to power circuitry of DUAL CHANNEL ITREL® (DCI) implantable spinal nerve stimulator IPGs manufactured by MEDTRONIC, INC., that deliver electrical stimulation into the spinal column, and may be used in the future to power circuitry of other IPGs and implantable drug dispensers and monitors.

Organic solvents known for use in such lithium/SVO cells in combination with lithium salts can be, for example, 3-methyl-2-oxazolidone, sulfolane, tetrahydrofuran, methyl-substituted tetrahydrofuran, 1,3-dioxolane, propylene carbonate (PC), ethylene carbonate, gamma-butyrolactone, ethylene glycol sulfite, dimethylsulfite, dimethyl sulfoxide or mixtures thereof and also, for example, low viscosity cosolvents such as tetrahydrofuran (THF), methyl-substituted tetrahydrofuran (Met-THF), dioxolane (DIOX), dimethoxyethane (DME), dimethyl isoxazole (DMI), diethyl carbonate(DEC), ethylene glycol sulfite (EGS), dioxane, dimethyl sulfite (DMS), dimethyl carbonate, methyl ethyl carbonate, dipropyl carbonate, ethylene carbonate, gamma-butyrolactone, acetonitrile, formamide, dimethyl formamide, triglyme (tri(ethylene glycol)dimethyl ether), diglyme (diethylene glycol dimethyl ether), glyme (ethylene glycol dimethyl ether), nitromethane and mixtures thereof or the like. The ionizing solute for these cells can be a simple salt, as for example, LiCF₃ SO₃, LiBF₄, LiAsF₆, LiPF₆ and LiCI0₆, or double salts or mixtures thereof, that produce an ionically conductive solution when dissolved in one or more solvents.

The ether-based liquid organic electrolytes described above are highly reactive and can migrate within the cell enclosure and cause the anode and cathode to electrically short, ending the battery life. The anode, cathode, electrolyte and the separator between the anode and cathode are therefore typically enclosed within the conductive enclosure by case liners that are also formed of polyethylene, polypropylene, ETFE, or the like, to contain the electrolyte. In particular, the ether-based organic electrolytes described above can also damage many polymers and the lithium in the lithium salts can build up over time until an electrically conductive lithium layer extends across the exposed glass between the feedthrough pin and ferrule and electrically short-circuit the anode and cathode, causing the cell to fail.

As described and shown in the figures of the above-referenced '206 patent, a feedthrough pin insulator 90 is injection molded or overmolded over the interior portions or surfaces of the feedthrough pin 25, the glass insulator 28, and the ferrule 27. The feedthrough pin insulator 90 is molded from polyethylene, polypropylene, ETFE, or the like, over these interior feedthrough components after the feedthrough ferrule 27 is welded into an aperture 20 through the enclosure cover 15 to form a cover sub-assembly. Although it is referred to as a "feedthrough pin insulator", the feedthrough pin insulator 90 is intended to inhibit migration of the electrolyte along the feedthrough pin 25 into contact with the ferrule 27 and the annular glass insulator 28 and to present a very long path for an electrical short to develop by lithium deposition over its exterior surface. As described in the above-referenced '206 patent, the protective layer afforded by the feedtluough pin insulator 90 may or may not make contact with the inner surface of the annular glass insulator 28.

In practice, it has been found that the feedthrough pin insulator 90 tends to shrink upon cooling, and gaps can form between the material of the feedthrough pin insulator 90 and the feedthrough pin 25, the ferrule 27, and the annular glass insulator 28. In particular, it has been found that if such gaps occur, the electrolyte can migrate along the feedthrough pin 25 and into any gap between the feedthrough pin insulator 90 and the annular glass insulator 28 eventually resulting in an electrical short caused by lithium deposition, leading to premature failure of the battery. The gaps may not be readily apparent from inspection of the cover sub-assembly or may appear after the cover subassembly is welded to the cell enclosure.

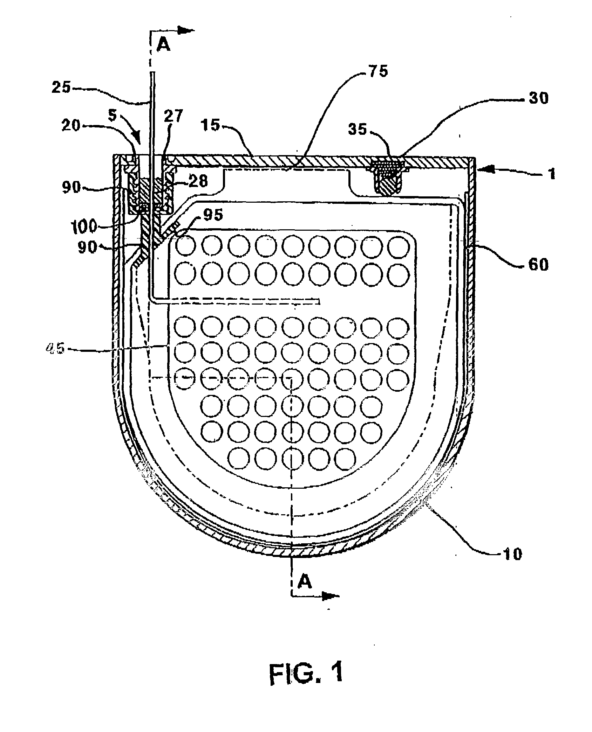

Therefore, a technique has been developed and employed to lessen the possibility of cell failure should such gaps occur. In particular, the manufacturing technique set forth in the above-referenced '206 patent and illustrated in FIGs. 1 - 4 has been modified by applying a coating of ETFE over the surfaces of the feedthrough pin 25, the ferrule 27, and the annular glass insulator 28 before the feedthrough pin insulator 90 is molded over these surfaces. Like polyethylene and polypropylene, the ETFE coating is resistant to degradation by the ether-based solvents and lithium salts of the electrolyte. Unlike polyethylene and polypropylene, the thin ETFE coating also resists melting when heat is subsequently transmitted either in the molding step or along the feedthrough pin during the welding of the external end of the feedthrough pin to a substrate pad or the like to make a circuit connection or through the ferrule when the cover is welded to the case.

To make the ETFE coating, an ETFE liquid suspension is prepared from ETFE powder mixed with ethanol, and the ETFE liquid suspension is painted or otherwise deposited on the surfaces. Then, the coating is cured to evaporate the ethanol and melt the ETFE powder into a continuous layer that bonds securely to the surfaces. After inspection, the feedthrough pin insulator 90 is then molded over the ETFE coated surfaces of the feedthrough pin 25, the ferrule 27, and the annular glass insulator 28. The heat of the molding step does not affect the patency of the ETFE coating, and any molding gaps that may occur, occur between the polypropylene or polyethylene feedthrough pin insulator 90 and the ETFE coated surfaces of the feedthrough pin 25, the ferrule 27, and the annular glass insulator 28. In this way, the ETFE coating inhibits short-circuiting due to migration of the organic electrolyte into the gaps as described above.

However, an even, continuous ETFE coating must be obtained for the ETFE coating to reliably protect and electrically insulate the coated surfaces. The ETFE liquid suspension is applied after the feedthrough ferrule 27 is welded to the cover 15 to form a cover sub-assembly. Difficulties have been experienced in both the application and the curing of the ETFE suspension. The cured ETFE coatings frequently exhibit bubbles, voids and fissures, and the ETFE powder can be overheated and burned or charred. Minute defects in the ETFE coatings are not readily apparent. Those defects that can be observed in inspection cause the feedthrough and cover sub-assembly to be scrapped, increasing cost of manufacture.

It has been found to be particularly difficult to obtain a substantially uniform ETFE coating over the annular surface of the glass insulator 28. It is difficult to maintain the ETFE powder in uniform distribution in the ETFE liquid suspension, and so it is not possible to precisely determine the amount of ETFE that may be in the coating that is applied. It is difficult to deliver an appropriate amount of the ETFE liquid suspension into the annular space between the conductive feedthrough pin 25 and the ferrule 27 due to the wetting characteristics and surface tension of the ETFE liquid suspension and the minute ferrule dimensions. It is also difficult to see any gaps or bubbles that might be present after the ETFE liquid suspension is applied or to see other defects arising after curing.

Consequently, there is a need for an improved method of protecting such electrochemical cells from premature cell failure due to electrical short-circuiting between the feedthrough pin and/or damage to the feedthrough insulator due to reactive electrolyte.

In accordance with the present invention, the vulnerable surfaces of a feedthrough employed in electrochemical cells having a reactive electrolyte prone to attack the feedthrough materials and/or form an electrically conductive deposit bridging a feedthrough insulator are coated with a substantially uniform, electrically insulating, coating of a thermoplastic polymer that can be applied in a thin, uniform layer, that has a high melting point, and that is resistant to degradation by the electrolyte to form an electrically insulating coating that strongly adheres to the feedthrough surfaces. The polymer is preferably an aliphatic or aromatic polyimide.

In accordance with one aspect of the present invention, the polyimide is applied in a liquid form over the feedthrough component surfaces of interest by painting, dabbing, swabbing or spraying and then dried or cured.

Preferably, the polyimide coating extends in a substantially uniform layer over the entire surface of the annular feedthrough insulator and for a first predetermined distance away from the insulator along the feedthrough pin and for a second predetermined distance away from the insulator over the ferrule surface.

Additionally, a feedthrough pin insulator is preferably molded over and against the polyimide coating and over any uncoated surfaces of the feedthrough pin and the ferrule, whereby the feedthrough pin insulator tends to inhibit migration of the electrolyte along the feedthrough pin or the ferrule and the polyimide coating protects the annular glass insulator.

This summary of the invention has been presented here simply to point out some of the ways that the invention overcomes difficulties presented in the prior art and to distinguish the invention from the prior art and is not intended to operate in any manner as a limitation on the interpretation of claims that are presented initially in the patent application and that are ultimately granted.

These and other advantages and features of the present invention will be more readily understood from the following detailed description of the preferred embodiments thereof, when considered in conjunction with the drawings, in which like reference numerals indicate identical structures throughout the several views, and wherein:
FIG. 1 is a side view in cross-section of an electrochemical cell having a polyimide coating applied over the annular insulator of the feedthrough and adjacent surfaces of the feedthrough pin and ferrule in accordance with one preferred embodiment of the present invention;
FIG. 2 is a cross-section view taken along the line A--A of the electrochemical cell of FIG. 1;
FIG. 3 is an expanded cross-section view of a feedthrough welded to a cell cover depicting a polyimide coating over the feedthrough insulator surface and between the ferrule and the feedthrough pin;
FIG. 4 is an expanded cross-section view of a feedthrough welded to a cell cover depicting a polyimide coating extending over the feedthrough insulator surface and for a first predetermined distance away from the insulator along the feedthrough pin and for a second predetermined distance away from the insulator over the ferrule surface;
FIG. 5(a) is an end view of the completed sub-assembly of the coated feedthrough and cover with the feedthrough pin insulator molded over and against the polyimide coating and over any uncoated surfaces of the feedthrough pin and the ferrule; and
FIG. 5(b) is a side view of the completed sub-assembly of the coated feedthrough and cover with the feedthrough pin insulator molded over and against the polyimide coating and over any uncoated surfaces of the feedthrough pin and the ferrule; and

In the following detailed description, references are made to illustrative embodiments of methods and apparatus for carrying out the invention. It is understood that other embodiments can be utilized without departing from the scope of the invention.

FIG. 1 shows a lithium/SVO or lithium/CFₓ/SVO electrochemical cell 1 having a polyimide coating applied over the annular insulator of the feedthrough 5 and adjacent surfaces of the feedthrough pin 25 and ferrule 27 in accordance with one preferred embodiment of the present invention. The electrochemical cell 1 includes an enclosure or housing 10, a housing cover 15, and a feedthrough 5. Cover 15 has an opening for receiving the feedthrough ferrule 27 and an electrolyte fill port 30 which permits a liquid electrolyte to be poured inside housing 10 after assembly of cell 1 has been substantially completed. A disc 35 is welded into the fill port 30 to provide a hermetic seal after the liquid electrolyte is poured into the interior of housing 10. The housing 10, cover 15, and disc 35 are formed of a metals, e.g., stainless steel or titanium, that can be laser welded together to hermetically enclose the anode, cathode, electrolyte and other interior cell components described below.

An electrically conductive feedthrough pin is supported within the annulus of the feedthrough ferrule 27 by an annular pin insulator 28 that electrically insulates pin 25 from housing 10 and also hermetically seals opening 20. The feedthrough insulator 28 is preferably formed of TA-23 or CABAL-12 glass, but may also be formed of alumina or aluminum oxide, or any other suitable electrically insulating, ceramic-containing material comprising, for example, sapphire or zirconium oxide, all referred to for convenience herein as "glass". Ferrule 27 is most preferably formed of MP35N alloy, grade 3 titanium or 316 stainless steel, and less preferably from niobium, titanium, titanium alloys such as titanium-6Al-4V or titanium-vanadium, platinum, molybdenum, zirconium, tantalum, vanadium, tungsten, iridium, rhodium, rhenium, osmium, ruthenium, palladium, silver, aluminum, and alloys, mixtures and combinations thereof, depending on the chemical system selected for cell 1. Ferrule 27 may be welded by other means to the opening of housing 10, or soldered or glued thereto so long as the seal so formed is hermetic. Pin 25 is most preferably formed of niobium, titanium, titanium alloys such as titanium-6Al-4V or titanium-vanadium, platinum, molybdenum, zirconium, tantalum, vanadium, tungsten, iridium, rhodium, rhenium, osmium, ruthenium, palladium, silver, aluminum, and alloys, mixtures and combinations thereof, depending on the chemical system selected for cell 1.

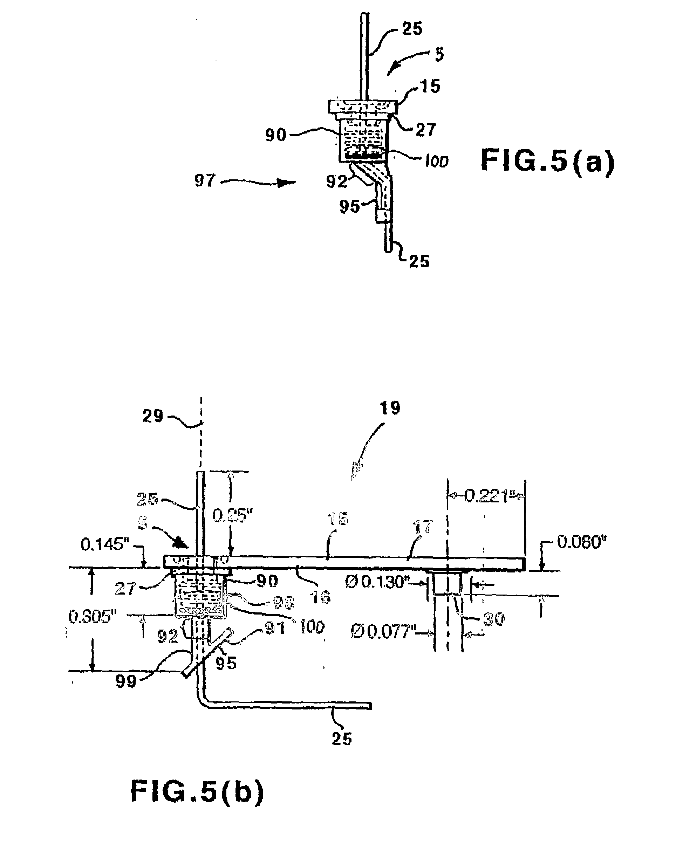

FIG. 2 shows a cross-sectional view of cell 1 of FIG. 1 taken along the line A-A. In FIG. 2, various layered elements are disposed within housing 10. Anode 40 is generally pressed onto anode current collector 45 comprising an electrically conductive metal such as stainless steel, nickel or titanium. Anode current collector 45 preferably has a plurality of holes to promote adhesion of the material forming anode 40 thereon, but may assume any of a number of different geometric and structural configurations. The end of feedthrough pin 25 extending into the cell housing 10 is preferably spot welded or otherwise attached to anode current collector 45.

Separator 50 is formed of a microporous material such as polypropylene, polyethylene or ETFE, and permits the transfer of a liquid ionic electrolyte (not shown) therethrough. In one embodiment of the present invention, the liquid electrolyte comprises a solvent and a lithium salt that is in contact with anode 40 and cathode 55. Separator 50 completely surrounds and seals anode 40 and anode current collector 45.

In an alternative embodiment of separator 50, a non-woven absorbent layer (not shown) may be provided in addition to the microporous layer forming separator 50. Such a non-woven absorbent layer is preferably disposed between separator 50 and anode 40 and between adjoining surfaces of anode 40 and cathode 55. In addition to acting as an electrolyte reservoir, such a non-woven absorbent layer may compress or expand in response to any changes in cathode or anode volume during cell discharge.

Case liner 67 may be formed of materials such as polyethylene, polypropylene or ETFE, and electrically insulates anode 40 from the internal surface of housing 10. Case liner 67 further separates cathode 55 from the internal surface of housing 10, even though cathode 55 is electrically connected to housing 10 by cathode current collector 60.

A cathode assembly comprising cathode 55 and cathode current collector 60 is permeated by electrolyte. Cathode current collector 60 is placed in a closely fitting die fixture such that the die maintains the shape of cathode current collector 60 as the cathode assembly is formed. A measured volume of cathode mixture comprising, for example, a mixture of powdered manganese dioxide, an inert powdered binding material such as PTFE and conductivity enhancer such as graphite or carbon black is placed into the die inside the current collector. Other suitable cathode materials may be employed such as silver vanadium oxide (Ag₂V₄O₁₁) or mercuric oxide. The cathode mixture is compressed in a press (e.g., at ambient temperature and at 20-40 tons of gauge pressure for about 1-20 seconds) within cathode current collector 60 to form a self-supporting cathode body 55 having opposite, exposed, flat surfaces.

The liquid electrolyte that is poured into the cell 1 before the disc 35 is welded in place can include an organic solvent in combination with an ionizing solute. Organic solvents known for use in such lithium/SVO cells in combination with lithium salts can be, for example, 3-methyl-2-oxazolidone, sulfolane, tetrahydrofuran, methyl-substituted tetrahydrofuran, 1,3-dioxolane, propylene carbonate (PC), ethylene carbonate, gamma-butyrolactone, ethylene glycol sulfite, dimethylsulfite, dimethyl sulfoxide or mixtures thereof and also, for example, low viscosity cosolvents such as tetrahydrofuran (THF), methyl-substituted tetrahydrofuran (Met-THF), dioxolane (DIOX), 1, 2 dimethoxyethane (DME), dimethyl isoxazole (DMI), diethyl carbonate(DEC), ethylene glycol sulfite (EGS), dioxane, dimethyl sulfite (DMS) dimethyl carbonate, methyl ethyl carbonate, dipropyl carbonate, ethylene carbonate, gamma-butyrolactone, acetonitrile, formamide, dimethyl formamide, triglyme (tri(ethylene glycol)dimethyl ether), diglyme (diethylene glycol dimethyl ether), glyme (ethylene glycol dimethyl ether), nitromethane and mixtures thereof or the like. The ionizing solute for these cells can be a simple salt or double salts or mixtures thereof, as for example, LiBF₄, LiAsF₆, LiPF₆ and LiCIO₄, LiCF₃SO₃, LiN(SOCL₂)₃, Li(SO₃)(CF₃)₃, or LiC(SO₂CF₃)₂, that produce an ionically conductive solution when dissolved in one or more solvents.

The embodiment of the present invention illustrated in the figures is representative of a SIGMA electrochemical cell manufactured by MEDTRONIC, INC., which is a medium-rate electrochemical cell having a lithium anode and a Combination Silver Vanadium Oxide (CSVO) cathode for electrically powering pacemakers and the like. The SIGMA battery comprises a CSVO pressed powder cathode, a pressed lithium metal anode and a liquid electrolyte containing 1 molar LiAsF₆, in a mixture of 50% PC / 50% glyme.

Insulator 90 is most preferably molded from polypropylene, ETFE, polyethylene or any other suitable, preferably polymeric, material capable of withstanding exposure to the various constituents and components disposed inside cell 1, such as the liquid electrolyte. Those skilled in the art will now understand that other compositions of matter than those set forth explicitly herein may also find application in the formation of insulator 90 of the present invention.

In accordance with the present invention, the vulnerable surfaces of a feedthrough, e.g., feedthrough 5, employed in electrochemical cells, e.g., cell 1, are coated with a substantially uniform, electrically insulating, coating of a thermoplastic polymer that can be applied in a thin, uniform layer, that has a high melting point, and that is resistant to degradation by the electrolyte to form an electrically insulating coating that strongly adheres to the feedthrough surfaces. The applied thermoplastic polymer protects the vulnerable surfaces prone to attack by the reactive electrolyte and/or blocks the formation of an electrically conductive deposit bridging the surface of the feedthrough insulator 28. The thermoplastic polymer used to form the coating is preferably a polyimide.

In the process of fabricating the cell 1, the feedthrough ferrule 27 is inserted into the opening 20 through the cell cover 15 and welded to the cell cover 15 forming a circular weld. Preferably, a leak test, e.g., a helium leak test, is conducted to determine if any cracks have formed in the glass insulator 28. The interior vulnerable surfaces of the feedthrough 5 are then protected by applying a thermoplastic coating, particularly a polyimide coating, in liquid form and curing or drying the applied layer to form a thin film that is tightly bonded to the vulnerable surfaces.

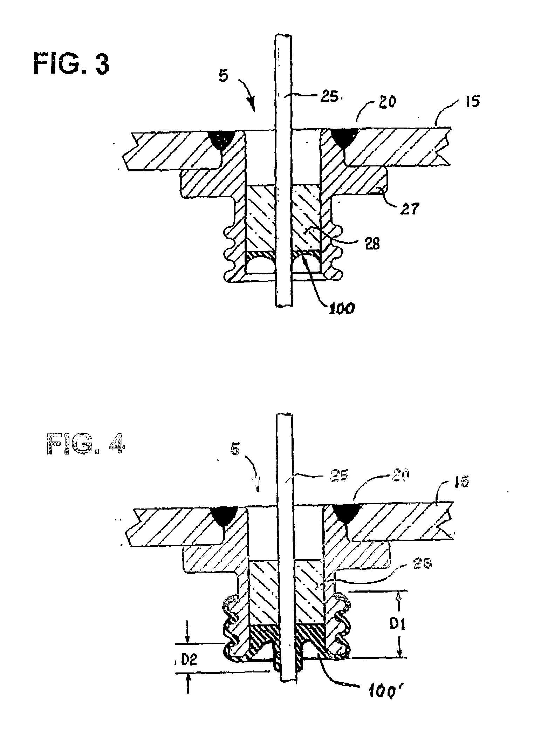

FIG. 3 is an expanded cross-section view of the feedthrough ferrule 27 welded into the opening 20 through the cell cover 15 depicting one version of the polyimide coating 100 applied over the surface of the feedthrough insulator 28 to extend between the ferrule 27 and the feedthrough pin 25. The polyimide coating 100 extends substantially over the inner glass surface of the glass insulator 28.

FIG. 4 is an expanded cross-section view of the feedthrough ferrule 27 welded into the opening 20 through the cell cover 15 depicting a second version of the polyimide coating 100' applied over the surface of the feedthrough insulator 28 to extend for a first predetermined distance D1 away from the insulator 28 over the surface of ferrule 27 and for a second predetermined distance D2 away from the insulator 28 along the feedthrough pin 25.

The liquid polyimide coating 100 or 100' can be applied manually or automatically to the vulnerable surfaces as depicted in FIGs. 3 and 4 through a variety of application or deposition techniques. For example, the polyimide coating may be manually applied using a syringe and fine needle or pipette or using a brush or dabbing instrument. The wetting characteristics of liquid polyimides ensure wetting of the vulnerable surfaces. Techniques, e.g., centrifuging, may be employed to drive out any air bubbles if necessary. But, generally, the application is easier and the wetting is superior to those using suspended ETFE powder. The non-uniformity in the thickness of the applied ETFE powder suspension and the discoloration or charring of the ETFE during curing are avoided.

Moreover, the polyimide dries or cures into a substantially uniformly thick polyimide coating 100, 100' that tenaciously adheres to the vulnerable surfaces. The melting temperature of the polyimide coating is advantageously higher than the molding temperature that is employed to later mold the insulator 90 in place. Consequently, the polyimide coating does not soften or loosen during molding of the insulator 90. In this way, gaps between the insulator 90 and the polyimide coating 100, 100', are advantageously minimized.

In an initial screening test, various polyimides were found to be resistant to degradation upon exposure for 5 weeks at 70° C to an electrolyte comprising 1 molar LiBF₆ in a 60% GBL / 40% glyme solvent.

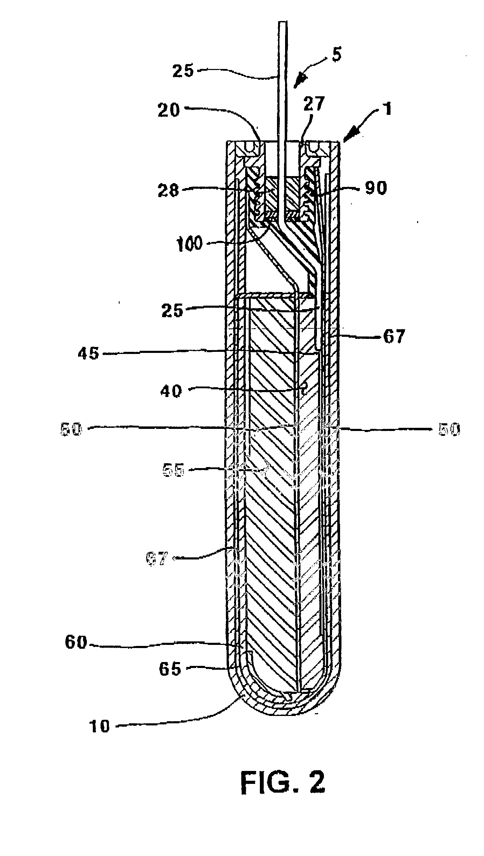

A header assembly 19 comprising the feedthrough 5 welded with the cover 15 with the a pin insulator sub-assembly 97 formed after the molding of insulator 90 over the interior portion of the feedthrough pin 25, the polyimide coating 100 (or 100') and to or over the ferrule 27 is depicted in FIGS. 5(a) and 5(b). Various shapes and dimensions are illustrated and called out in FIGs. 5 (a) and 5(b) related to the specific cell 1 disclosed in the above-referenced '206 patent that are not material to the practice of the present invention but are included for completeness of description of a preferred embodiment of practicing the invention.

In this respect, the lower portion of feedthrough pin 25 is most preferably bent at a 90° angle so that pin 25 extends laterally away from feedthrough vertical centerline 29 a sufficient distance to permit easy mechanical and electrical connection of pin 25 to anode current collector 45. The lower end of feedthrough pin 25 is electrically connected to current collector 45. First and second portions 98 and 99 of insulator 90 are disposed beneath an internal surface 16 of cover 15 and inside housing 10. At least portions of feedthrough pin 25 are connected to or enclosed within feedthrough pin insulator 90. First portion 98 is disposed at a location at or near ferrule 27. Second portion 99 is disposed at a location at or near anode 40. Feedthrough pin insulator 90 preferably extends between anode 40 and ferrule 27, and at least portions of feedthrough pin 25 engage or are enclosed thereby. Feedthrough pin insulator 90 most preferably electrically insulates feedthrough pin 25 from ferrule 27 and other cell components having the same electrical potential as the cathode. Feedthrough pin insulator 90 has gate or dam 95 attached to or forming part of second portion 99. Dam or gate 95 has sealing surface 91 forming a portion thereof for preventing or inhibiting anode material from being extruded or pushed therearound when sealing surface 91 is pushed against a sidewall of an anode formation cavity during an anode formation process as described in the above-referenced '206 patent.

Thus, an example of the coating of vulnerable surfaces of electrochemical cell feedthroughs with a polyimide is described above in relation to a known electrochemical cell 1 of the above-referenced '206 patent. It will be understood that the present invention can be practiced in the protection of vulnerable surfaces of feedthroughs of any configuration affixed to a side wall of a housing of an electrochemical cell of any configuration or chemistry where such coating would be beneficial.

## Claims

1. A method of protecting vulnerable surfaces of a feedthrough (5) within a housing (10) of an electrochemical cell enclosing a reactive chemical compound, the feedthrough comprising an electrically conductive ferrule (27), an elongated electrically conductive feedthrough pin (25), and annular glass insulator (28) supporting the electrically conductive feedthrough pin spaced from the feedthrough ferrule, comprising:
attaching the feedthrough ferrule (27) of the feedthrough to a side wall of the housing to dispose the feedthrough pin extending through the side wall; and
coating the interior surface of the feedthrough insulator vulnerable to degradation upon contact with the reactive chemical compound with polyimide that forms a polyimide coating that tenaciously adheres to the vulnerable surfaces and is resistant to degradation by the reactive chemical compound.

2. A method of protecting vulnerable surfaces of a feedthrough within a housing of an electrochemical cell of the type having a lithium anode, a cathode selected from the group consisting of silver vanadium oxide (SVO) cathode and a hybrid CFₓ/SVO cathode formed of SVO and carbon monofluoride (CFₓ), and a liquid organic type electrolyte that comprises a lithium salt in combination with an organic solvent, the feedthrough comprising an electrically conductive ferrule (27), an elongated electrically conductive feedthrough pin (25); and annular glass insulator (28) supporting the electrically conductive feedthrough pin spaced from the feedthrough ferrule subject to degradation by the electrolyte or bridging by deposition of lithium across the glass insulator, comprising:
attaching the feedthrough ferrule of the feedthrough to a side wail of the housing (10) to dispose the feedthrough pin extending through the side wall; and
coating the interior surface of the feedthrough glass insulator vulnerable to degradation upon contact with the reactive chemical compound with polyimide that forms a polyimide coating that tenaciously adheres to the vulnerable surfaces and is resistant to degradation by the reactive electrolyte and increases the distance that deposited lithium must extend to form an electrically conductive bridge between the feedthrough pin and ferrule.

3. The method of Claim 1 or 2, wherein the coating step further comprises the step of extending polyimide coating in a substantially uniform layer over the entire surface of the annular feedthrough insulator and for a first predetermined distance away from the insulator along the feedthrough pin and for a second predetermined distance away from the insulator over the ferrule surface.

4. The method of Claim 1, 2 or 3, further comprising the step of forming a feedthrough pin insulator over and against the polyimide coating and over any uncoated surfaces of the feedthrough pin and the ferrule, whereby the feedthrough pin insulator protects the feedthrough pin and ferrule from degradation and tends to inhibit migration of the reactive chemical compound along the feedthrough pin or the ferrule

5. The method of Claim 4, wherein the feedthrough pin insulator is formed of at least one material selected from the group consisting of polypropylene, ETFE, and polyethylene having a lower melting temperature than the polyimide coating

6. An electrochemical cell comprising:
an anode (40) having an anode current collector (45) disposed operatively in respect thereof,
a cathode (55) having a cathode current collector (60) disposed operatively in respect thereof, the cathode being disposed operatively in respect of the anode, the anode and cathode being disposed within the housing;
a separator (50) between the anode and cathode;
a reactive liquid electrolyte permeating the separator;
a metal housing (10) enclosing the anode, cathode, separator and electrolyte having a housing side wall with an opening therethrough;
a feedthrough (5) comprising an electrically conductive ferrule (27), an elongated electrically conductive feedthrough pin (25), and annular glass insulator (28) supporting the electrically conductive feedthrough pin spaced from the feedthrough ferrule, the ferrule hermetically sealed into the opening in the side wall to dispose the feedthrough pin extending through the side wall electrically insulated from the housing and coupled to one of the anode and cathode; and
a polyimide coating resistant to degradation by the electrolyte over the interior surface of the feedthrough glass insulator.

7. The electrochemical cell of Claim 6, wherein the polyimide coating extends in a substantially uniform layer over the entire surface of the annular feedthrough insulator and for a first predetermined distance away from the insulator along the feedthrough pin and for a second predetermined distance away from the insulator over the ferrule surface.

8. The electrochemical cell of Claim 6 or 7, further comprising a feedthrough pin insulator over and against the polyimide coating and over any uncoated surfaces of the feedthrough pin and the ferrule, whereby the feedthrough pin insulator protects the feedthrough pin and ferrule from degradation and tends to inhibit migration of the reactive chemical compound along the feedthrough pin or the ferrule.

9. The electrochemical cell of Claim 8, wherein the feedthrough pin insulator is formed of at least one material selected from the group consisting of polypropylene, ETFE, and polyethylene having a lower melting temperature than the polyimide coating.

10. The electrochemical cell of any of Claims 6 to 9, wherein:
the anode is a lithium anode;
the cathode is selected from the group consisting of silver vanadium oxide (SVO) cathode and a hybrid CF_{N}/SVO cathode formed of SVO and carbon monofluoride (CFₓ),
the liquid electrolyte that comprises a lithium salt in combination with an organic solvent; and
the polyimide coating that tenaciously adheres to the vulnerable surfaces is resistant to degradation by the reactive electrolyte and increases the distance that deposited lithium must extend to form an electrically conductive bridge between the feedthrough pin and ferrule.

## Patentansprüche

1. Verfahren zum Schutz von angreifbaren bzw. ungeschützten Oberflächen einer Durchkontaktierung (5) innerhalb eines Gehäuses (10) einer eine reaktive chemische Verbindung einschließenden elektrochemischen Zelle, wobei die Durchkontaktierung eine elektrisch leitende Hülse (27), einen langgestreckten, elektrisch leitenden Durchkontaktierungs-Anschlussstift (25) sowie einen ringförmigen Glasisolator (28) aufweist, der den elektrisch leitenden Durchkontaktierungs-Anschlussstift in Abstand zu der Durchkontaktierungs-Hülse trägt bzw. hält, wobei
die Durchkontaktierungs-Hülse (27) der Durchkontaktierung an einer Seitenwand des Gehäuses angebracht wird, um den Durchkontaktierungs-Anschlussstift, der sich durch die Seitenwand erstreckt, anzuordnen; und
die innere Oberfläche des Durchkontaktierungs-Isolators, die bei Kontakt mit der reaktiven chemischen Verbindung anfällig für Degradation bzw. Abbau ist, mit Polyimid beschichtet wird, das eine Polyimidbeschichtung bildet, die zäh auf den angreifbaren bzw. ungeschützten Oberflächen haftet und gegen Degradation bzw. Abbau durch die reaktive chemische Verbindung resistent ist.

2. Verfahren zum Schützen angreifbarer bzw. ungeschützter Oberflächen einer Durchkontaktierung innerhalb eines Gehäuses einer elektrochemischen Zelle des Typs, der eine Lithiumanode aufweist, eine Kathode, die aus der Gruppe bestehend aus einer Silbervanadiumoxid(SVO)-Kathode und einer Hybrid-CFₓ/SVO-Kathode, die aus SVO und Karbonmonofluorid (CFₓ) gebildet ist, und einem Elektrolyt vom flüssigen organischen Typ, der ein Lithiumsalz in Kombination mit einem organischen Lösungsmittel aufweist, ausgewählt ist, wobei die Durchkontaktierung eine elektrisch leitende Hülse (27), einen langgestreckten, elektrisch leitenden Durchkontaktierungs-Anschlussstift (25) und einen ringförmigen Glasisolator (28) aufweist, der den elektrisch leitenden Durchkontaktierungs-Anschlussstift in Abstand zu der Durchkontaktierungs-Hülse hält bzw. trägt, und der einer Degradation bzw. einem Abbau durch den Elektrolyten oder einer Überbrükkung durch Ablagerung von Lithium über den Glasisolator ausgesetzt ist, wobei
die Durchkontaktierungs-Hülse der Durchkontaktierung an einer Seitenwand des Gehäuses (10) angebracht wird, um den Durchkontaktierungs-Anschlussstift, der sich durch die Seitenwand erstreckt, anzuordnen; und
die innere Oberfläche des Durchkontaktierungs-Glasisolators, die bei Kontakt mit der reaktiven chemischen Verbindung anfällig für Degradation bzw. Abbau ist, mit Polyimid beschichtet wird, das eine Polyimidbeschichtung bildet, die zäh auf den angreifbaren bzw. ungeschützten Oberflächen haftet und gegen Degradation bzw. Abbau durch den reaktiven Elektrolyt resistent ist und die den Abstand erhöht, über den sich abgelagertes Lithium erstrecken muss, um eine elektrisch leitende Brücke zwischen dem Durchkontaktierungs-Anschlussstift und der Hülse zu bilden.

3. Verfahren nach Anspruch 1 oder 2, bei dem der Schritt der Beschichtung weiter den Schritt umfasst, dass die Polyimidbeschichtung als eine im wesentlichen gleichförmige Schicht über die gesamte Oberfläche des ringförmigen Durchkontaktierungs-Isolators um einen ersten vorbestimmten Abstand weg vom Isolator entlang des Durchkontaktierungs-Anschlussstifts und um einen zweiten vorbestimmten Abstand weg vom Isolator über die Hülsenoberfläche ausgebreitet wird.

4. Verfahren nach Anspruch 1, 2 oder 3 mit dem weiteren Schritt des Ausbildens eines Durchkontaktierungs-Anschlussstift-Isolators über und gegen die Polyimidbeschichtung und über jedwede unbeschichteten Flächen des Durchkontaktierungs-Anschlussstiftes und der Hülse, wodurch der Durchkontaktierungs-Anschlussstift-Isolator den Durchkontaktierungs-Anschlussstift und die Hülse vor Degradation bzw. Abbau schützt und dazu neigt, die Migration bzw. Oberflächendiffusion der reaktiven chemischen Verbindung entlang des Durchkontaktierungs-Anschlussstiftes oder der Hülse zu hemmen.

5. Verfahren nach Anspruch 4, bei dem der Durchkontaktierungs-Anschlussstift-Isolator aus mindestens einem Material gebildet ist, das aus der Gruppe ausgewählt ist, die aus Polypropylen, ETFE und Polyethylen mit einem niedrigeren Schmelzpunkt als die Polyimidbeschichtung besteht.

6. Elektrochemische Zelle mit
einer Anode (40) mit einem Anodenstromkollektor (45), der zu dieser in Wirkweise angeordnet ist;
einer Kathode (55) mit einem Kathodenstromkollektor (60), der zu dieser in Wirkweise angeordnet ist, wobei die Kathode in Bezug auf die Anode in Wirkweise angeordnet ist und die Anode und die Kathode innerhalb des Gehäuses angeordnet sind;
einem Separator (50) zwischen Anode und Kathode;
einem den Separator durchsetzenden reaktiven flüssigen Elektrolyt;
einem Metallgehäuse (10), das die Anode, Kathode, den Separator und den Elektrolyten umfasst, und das eine Gehäuseseitenwand mit einer hindurchgehenden Öffnung besitzt;
einer Durchkontaktierung (5), die eine elektrisch leitende Hülse (27), einen langgestreckten elektrisch leitenden Durchkontaktierungs-Anschlussstift (25) und einen ringförmigen Glasisolator (28) umfasst, der den elektrisch leitenden Durchkontaktierungs-Anschlussstift in Abstand von der Durchkontaktierungs-Hülse trägt bzw. hält, wobei die Hülse in der Öffnung der Seitenwand hermetisch eingeschlossen ist, um den Durchkontaktierungs-Anschlussstift, der sich durch die Seitenwand erstreckt, elektrisch isoliert vom Gehäuse und mit der Anode und/oder der Kathode verbunden zu halten bzw. anzuordnen; und mit
einer Polyimidbeschichtung über die innere Oberfläche des Durchkontaktierungs-Glasisolators, die gegenüber Degradation bzw. Abbau durch den Elektrolyt resistent ist.

7. Elektrochemische Zelle nach Anspruch 6, bei der sich die Polyimidbeschichtung als im wesentlichen gleichförmige Schicht über die gesamte Oberfläche des ringförmigen Durchkontaktierungs-Isolators und um einen ersten vorbestimmten Abstand weg vom Isolator entlang des Durchkontaktierungs-Anschlussstifts und um einen zweiten vorbestimmten Abstand weg vom Isolator über die Hülsenoberfläche erstreckt.

8. Elektrochemische Zelle nach Anspruch 6 oder 7 mit weiter einem Durchkontaktierungs-Anschlussstift-Isolator über und gegen die Polyimidbeschichtung sowie über jedwede unbeschichtete Oberfläche des Durchkontaktierungs-Anschlussstiftes und der Hülse, wodurch der Durchkontaktierungs-Anschlussstift-Isolator den Durchkontaktierungs-Anschlussstift und die Hülse vor Degradation bzw. Abbau schützt und dazu neigt, Migration der reaktiven chemischen Verbindung entlang des Durchkontaktierungs-Anschlussstifts oder der Hülse zu hemmen.

9. Elektrochemische Zelle nach Anspruch 8, bei der der Durchkontaktierung-Anschlussstift-Isolator aus zumindest einem Material gebildet ist, das aus der Gruppe ausgewählt ist, die aus Polypropylen, ETFE und Polyethylen mit einem niedrigerem Schmelzpunkt als die Polyimidbeschichtung besteht.

10. Elektrochemische Zelle nach einem der Ansprüche 6 bis 9, bei der
die Anode eine Lithiumanode ist;
die Kathode aus einer Gruppe ausgewählt ist, die aus einer Silbervanadiumoxid(SVO)-Kathode und einer Hybrid-CFₓ/SVO-Kathode, die aus SVO und Karbonmonofluorid (CFₓ) gebildet ist, besteht;
der flüssige Elektrolyt ein Lithiumsalz in Kombination mit einem organischen Lösungsmittel aufweist; und
die Polyimidbeschichtung zäh an den angreifbaren bzw. ungeschützten Flächen haftet und gegen Degradation bzw. Abbau durch das reaktive Elektrolyt resistent ist und den Abstand erhöht, über den sich abgeschiedenes Lithium erstrecken muss, um eine elektrisch leitende Brücke zwischen dem Durchkontaktierungs-Anschlussstift und der Hülse zu bilden.

## Revendications

1. Procédé de protection de surfaces vulnérables d'une traversée (5) dans un boîtier (10) d'une pile électrochimique renfermant un composé chimique réactif, la traversée comportant une bague électriquement conductrice (27), une broche de traversée électriquement conductrice allongée (25), et un isolant en verre annulaire (28) supportant la broche de traversée électriquement conductrice espacée de la bague de traversée, comportant les étapes consistant à :
fixer la bague de traversée (27) de la traversée sur une paroi latérale du boîtier pour disposer la broche de traversée s'étendant à travers la paroi latérale ; et
recouvrir la surface intérieure de l'isolant de traversée vulnérable à une dégradation lors d'un contact avec le composé chimique réactif de polyimide qui forme un revêtement de polyimide qui vient en adhérence de manière tenace sur les surfaces vulnérables, et qui résiste à une dégradation par le composé chimique réactif.

2. Procédé de protection de surfaces vulnérables d'une traversée dans un boîtier d'une pile électrochimique du type ayant une anode de lithium, une cathode sélectionnée dans le groupe constitué d'une cathode d'oxyde de vanadium-argent (SVO) et d'une cathode de CFₓ/SVO hybride formée de SVO et de monofluorure de carbone (CFₓ), et un électrolyte de type organique liquide qui comporte un sel de lithium en combinaison avec un solvant organique, la traversée comportant une bague électriquement conductrice (27), une broche de traversée électriquement conductrice allongée (25), et un isolant en verre annulaire (28) supportant la broche de traversée électriquement conductrice espacée de la bague de traversée soumise à une dégradation par l'électrolyte, ou établissant un pont par dépôt de lithium à travers l'isolant en verre, comportant les étapes consistant à :
fixer la bague de traversée de la traversée sur une paroi latérale du boîtier (10) pour disposer la broche de traversée s'étendant à travers la paroi latérale ; et
recouvrir la surface intérieure de l'isolant en verre de traversée vulnérable à une dégradation lors d'un contact avec le composé chimique réactif avec du polyimide qui forme un revêtement de polyimide qui vient en adhérence de manière tenace sur les surfaces vulnérables, et qui résiste à une dégradation par l'électrolyte réactif et augmente la distance sur laquelle du lithium déposé doit s'étendre pour former un pont électriquement conducteur entre la broche et la bague de traversée.

3. Procédé selon la revendication 1 ou 2, dans lequel l'étape de recouvrement comporte en outre l'étape consistant à étendre le revêtement de polyimide en une couche sensiblement uniforme sur toute la surface de l'isolant de traversée annulaire, et sur une première distance prédéterminée loin de l'isolant le long de la broche de traversée, et sur une seconde distance prédéterminée loin de l'isolant au-dessus de la surface de bague.

4. Procédé selon la revendication 1, 2 ou 3, comportant en outre l'étape consistant à former un isolant de broche de traversée au-dessus et contre le revêtement de polyimide, et au-dessus de quelconques surfaces non recouvertes de la broche de traversée et de la bague, de sorte que l'isolant de broche de traversée protège la broche et la bague de traversée d'une dégradation, et a tendance à empêcher une migration du composé chimique réactif le long de la broche de traversée ou de la bague.

5. Procédé selon la revendication 4, dans lequel l'isolant de broche de traversée est formé d'au moins un matériau sélectionné parmi le groupe comportant polypropylène, ETFE et polyéthylène ayant une température de fusion inférieure au revêtement de polyimide.

6. Pile électrochimique, comportant :
une anode (40) ayant un collecteur de courant d'anode (45) disposé de manière opérationnelle par rapport à celle-ci ;
une cathode (55) ayant un collecteur de courant de cathode (60) disposé de manière opérationnelle par rapport à celle-ci, la cathode étant disposée de manière opérationnelle par rapport à l'anode, l'anode et la cathode étant disposées dans le boîtier ;
un séparateur (50) entre l'anode et la cathode ;
un électrolyte liquide réactif pénétrant dans le séparateur ;
un boîtier métallique (10) renfermant l'anode, la cathode, le séparateur et l'électrolyte, ayant une paroi latérale de bottier munie d'une ouverture traversante ;
une traversée (5) comportant une bague électriquement conductrice (27), une broche de traversée électriquement conductrice allongée (25), et un isolant en verre annulaire (28) supportant la broche de traversée électriquement conductrice espacée de la bague de traversée, la bague étant scellée de manière hermétique dans l'ouverture de la paroi latérale pour disposer la broche de traversée s'étendant à travers la paroi latérale isolée électriquement du boîtier et couplée à une quelconque parmi l'anode et la cathode ; et
un revêtement de polyimide résistant à une dégradation par l'électrolyte au-dessus de la surface intérieure de l'isolant en verre de traversée.

7. Pile électrochimique selon la revendication 6, dans laquelle le revêtement de polyimide s'étend en une couche sensiblement uniforme sur toute la surface de l'isolant de traversée annulaire, et sur une première distance prédéterminée loin de l'isolant le long de la broche de traversée, et sur une seconde distance prédéterminée loin de l'isolant au-dessus de la surface de bague.

8. Pile électrochimique selon la revendication 6 ou 7, comportant en outre un isolant de broche de traversée au-dessus du revêtement de polyimide, et contre celui-ci, et au-dessus de quelconques surfaces non recouvertes de la broche de traversée et de la bague, de sorte que l'isolant de broche de traversée protège la broche de traversée et la bague d'une dégradation, et a tendance à empêcher une migration du composé chimique réactif le long de la broche de traversée ou de la bague.

9. Pile électrochimique selon la revendication 8, dans laquelle l'isolant de broche de traversée est formé d'au moins un matériau sélectionné dans le groupe comportant polypropylène, ETFE et polyéthylène ayant une température de fusion inférieure au revêtement de polyimide.

10. Pile électrochimique selon l'une quelconque des revendications 6 à 9, dans laquelle :
l'anode est une anode de lithium ;
la cathode est sélectionnée dans le groupe constitué d'une cathode d'oxyde de vanadium-argent (SVO) et d'une cathode de CFₓ/SVO hybride formée de SVO et de monofluorure de carbone (CFₓ);
l'électrolyte liquide comporte un sel de lithium en combinaison avec un solvant organique ; et
le revêtement de polyimide qui vient en adhérence de manière tenace sur les surfaces vulnérables est résistant à une dégradation par l'électrolyte réactif, et augmente la distance sur laquelle du lithium déposé doit s'étendre pour former un pont électriquement conducteur entre la broche et la bague de traversée.
